# DEMANDE DE BREVET EUROPEEN

(11) **EP 2 050 674 A1**
(43) Date de publication de la demande: **22.04.2009**
(21) Numéro de dépôt: 08166192.8
(22) Date de dépôt: 09.10.2008
(51) Int. Cl.: B64G 1/36, G01S 3/781, G01S 3/785, G01S 3/786, G02B 23/00

(54) **Système de visée absolue améliorée par combinaison d'un senseur d'étoiles et d'un capteur métrologique optique de vol en formation**

(30) Priorité: 19.10.2007 FR 0707336
(71) Demandeur: Thales, 92200 Neuilly Sur Seine (FR)
(72) Inventeur: Leyre, Xavier, 06650 Opio (FR); Napierala, Bruno, 06110 Le Cannet (FR)
(74) Mandataire: Esselin, Sophie

(57) **Abrégé**

La présente invention concerne un système de visée absolue destiné à être intégré à des satellites d'observation.
Pour établir un système de visée absolue dotée d'une précision maximale, la présente invention propose de coupler un senseur d'étoiles (4) à un système de métrologie optique (5N,5R). Ces deux équipements étant généralement déjà embarqués sur les satellites, en particulier pour des missions de vol en formation, cette solution n'induit pas de masse ni de coût additionnels.

## Description

La présente invention concerne un système de visée absolue destiné à être intégré à des satellites d'observation.

Actuellement, dans de nombreuses missions spatiales, et notamment celles nécessitant le vol en formation de plusieurs satellites, la précision de pointage absolu requise est très élevée. Pour effectuer le pointage absolu d'instruments d'observation embarqués sur des satellites, on utilise aujourd'hui des senseurs d'étoiles, également appelés senseurs stellaires. Ces senseurs d'étoiles classiques disposent de catalogues d'étoiles dont la position absolue est connue avec une grande précision. Cependant, les senseurs d'étoiles ne permettent de pointer en direction d'une étoile brillante connue que de façon approximative, avec une précision de l'ordre de plusieurs secondes d'arc.

Ainsi, pour des systèmes de visée absolue de l'état de l'art, même les plus récents, il est impossible d'atteindre les précisions de pointage absolu requises pour les missions actuellement envisagées, pour lesquelles les précisions exigées sont de l'ordre du dixième de seconde d'arc.
De plus, il est particulièrement difficile d'étalonner précisément ce type d'instruments : les biais mécaniques et thermoélastiques induits par l'intégration et le lancement, ainsi que l'environnement thermique, étant quasiment impossible à calibrer.

En conséquence, les solutions couramment recherchées consistent :
- soit à développer de nouveaux senseurs d'étoiles à la précision requise, c'est-à-dire inférieure à la seconde d'arc, mais cela nécessite de lourds investissements ; de plus, si une telle solution aboutissait à la mise au point d'un senseur d'étoiles avec la précision absolue souhaitée, cela engendrerait un supplément majeur en coût et en masse, ce qui n'est pas souhaitable, en particulier pour des applications spatiales,
- soit à chercher à mesurer précisément les biais induits mais cela est très difficile et les résidus sont de toute façon généralement estimés à plusieurs secondes d'arc.

Un but de l'invention est notamment de pallier les inconvénients précités. Ainsi pour établir un système de visée absolue doté d'une précision maximale, la présente invention propose de coupler un senseur d'étoiles à un capteur métrologique optique. Ces deux équipements étant généralement déjà embarqués sur les satellites, en particulier pour des missions de vol en formation, cette solution n'induit pas de masse ni de coût additionnels.

A cet effet, l'invention a pour objet un système de visée absolue comportant un senseur d'étoiles disposant d'un catalogue d'étoiles répertoriant un ensemble d'étoiles brillantes connues, c'est-à-dire dont on sait la position absolue, avec une précision catalogue, caractérisé en ce qu'il comporte en outre un capteur métrologique optique permettant de déterminer avec précision des positions relatives, présentant une précision de mesure et auquel est associé un référentiel, ledit capteur métrologique optique n'ayant par ailleurs aucune connaissance de l'environnement stellaire absolu, ledit senseur d'étoiles et ledit capteur métrologique optique coopérant de telle sorte que le senseur d'étoiles permet de pointer approximativement le capteur métrologique optique dans une direction visée correspondant à une étoile brillante connue du catalogue d'étoiles, le capteur métrologique optique déterminant alors de façon précise la direction de ladite étoile brillante connue dans son propre référentiel, permettant ainsi de connaître la direction visée avec une précision absolue optimisée, correspondant environ à la précision de mesure du capteur métrologique optique, à la précision catalogue près.

Avantageusement, l'étoile brillante connue présente une magnitude au moins égale pouvant être égale à 3, 4, 5, ou 6.
Avantageusement, le capteur métrologique optique comprend un ensemble de détecteurs de type CCD, CMOS ou APS.
Avantageusement, le capteur métrologique optique présente une précision lui permettant de déterminer une position relative d'un objet visé à 20 mètres à environ 10 microns près, permettant par conséquent d'atteindre une précision angulaire de visée inférieure ou égale à environ 0,1 seconde d'arc.
Avantageusement, le calibrage du capteur métrologique optique peut être intégralement effectué au sol, à l'aide d'une source optique fibrée incohérente d'une puissance de l'ordre du milliwatt.
Avantageusement, un satellite peut intégrer le système de visée absolue selon l'invention, lui permettant de pointer précisément l'instrument d'observation vers un astre.

Avantageusement, un procédé de pointage absolu peut exploiter le système de visée absolue selon l'invention, ledit senseur d'étoiles présentant un champ de vue large et le capteur métrologique optique présentant un champ de détection et un axe de visée, caractérisé en ce que :
- dans un premier temps, le senseur d'étoiles amène l'étoile brillante connue choisie comme direction visée, dans le champ de détection du capteur métrologique optique par l'intermédiaire de quelconques moyens de commandes et de mise en oeuvre de déplacements dudit système de visée absolue, ou alors, le champs de vue large du senseur d'étoiles et le champ de détection du capteur métrologique optique se recouvrent, par accommodation adéquate desdits senseur d'étoiles et capteur métrologique optique,
- dans un deuxième temps, le capteur métrologique optique mesure la direction visée dans son propre référentiel, la connaissance précise de la direction visée correspondant à l'étoile brillante connue dans le référentiel du capteur métrologique optique et de la position absolue de ladite étoile brillante connue grâce au catalogue d'étoiles permettant de déduire en fin de compte la direction visée absolue avec précision.
   Avantageusement, disposant d'un catalogue d'étoiles au sol, d'une précision supérieure à la précision catalogue du catalogues d'étoiles intégré audit système de visée absolue précédemment décrit, on peut mettre en oeuvre un procédé de pointage absolu, dans lequel on se réfère audit catalogue d'étoiles au sol afin d'augmenter la précision absolue sur la connaissance des coordonnées de ladite étoile brillante connue, de manière à augmenter la précision de la direction visée absolue.

D'autres caractéristiques et avantages de l'invention apparaîtront à l'aide de la description qui suit faite en regard des dessins annexés qui représentent :
- la figure 1 : l'illustration d'un premier exemple de pointage absolu d'un satellite en direction d'une étoile brillante à l'aide du dispositif selon l'invention ;
- la figure 2 : le schéma de principe d'un second exemple de système de visée absolue selon l'invention, permettant de détailler le procédé de mise en oeuvre du dispositif selon la présente demande de brevet ;
- la figure 3 : la représentation schématique d'un exemple de capteur métrologique optique dans le dispositif selon l'invention, permettant l'application de la présente demande brevet.

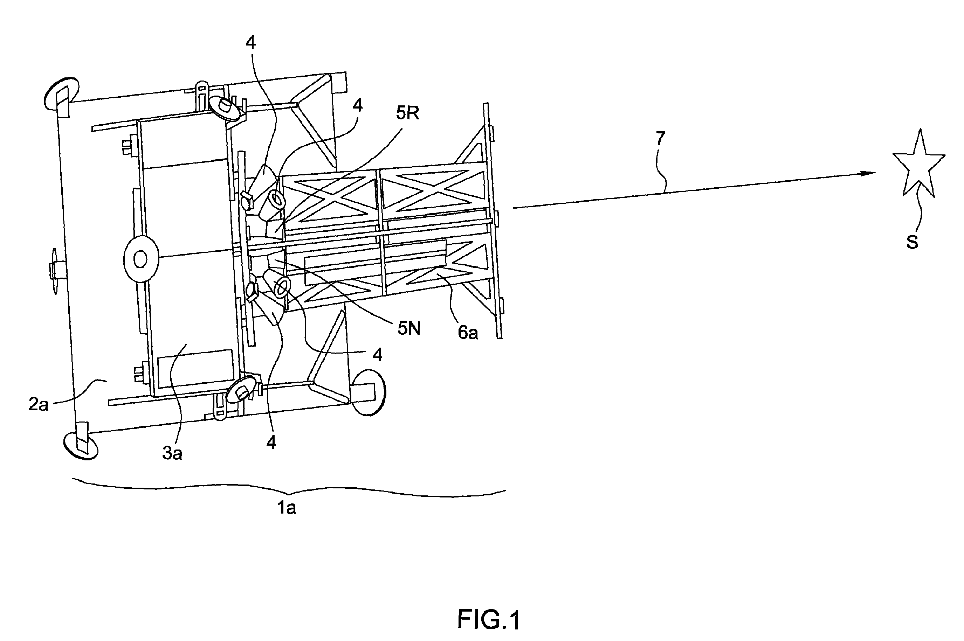

La figure 1 présente un schéma simple illustrant le pointage absolu d'un instrument spatial quelconque 6a embarqué sur un satellite 1a en direction 7 d'une étoile brillante S. Ce satellite 1a comprend un module de service 3a et un panneau solaire 2a destiné à fournir à l'ensemble l'énergie nécessaire à la mission.
Ainsi, le senseur d'étoiles, ou senseur stellaire, comprenant sur ce schéma quatre « têtes » 4, établit une cartographie d'une partie de la voute céleste grâce à un capteur numérique, de type CCD ou CMOS, et à une optique de focalisation de courte longueur focale et de champ relativement large, environ 20°, ce qui correspond approximativement à une constellation sur la voute céleste.
A la suite de cette cartographie, le senseur stellaire enregistre et numérise l'ensemble des étoiles qu'il a détectées, puis un calculateur intégré détermine l'axe de visée dudit senseur stellaire en calculant ses trois coordonnées grâce à un algorithme de reconnaissance et à un catalogue d'étoiles dans lequel sont répertoriées les positions absolues des étoiles brillantes de la voute céleste. On peut aussi utiliser un catalogue sol encore plus précis si nécessaire.

Généralement les étoiles utilisées sont de magnitude 2 à 5 et il suffit le plus souvent de trois ou quatre étoiles pour que l'algorithme converge. Par ailleurs, l'algorithme inclut généralement des traitements de minimisation de bruit et de suppression de « fausses étoiles ». La précision de détermination est de l'ordre de 10 à 20 secondes d'arc, ces valeurs étant des valeurs moyennes qui varient en fonction des fabricants et des technologies employées.
Cependant, la précision des senseurs d'étoiles actuels, même les plus perfectionnés, n'atteint pas la précision requise pour certaines missions spatiales aujourd'hui envisagées. Par conséquent, la présente invention propose de coupler le senseur stellaire précédemment décrit avec un capteur métrologique optique 5N permettant de déterminer avec précision des positions relatives.

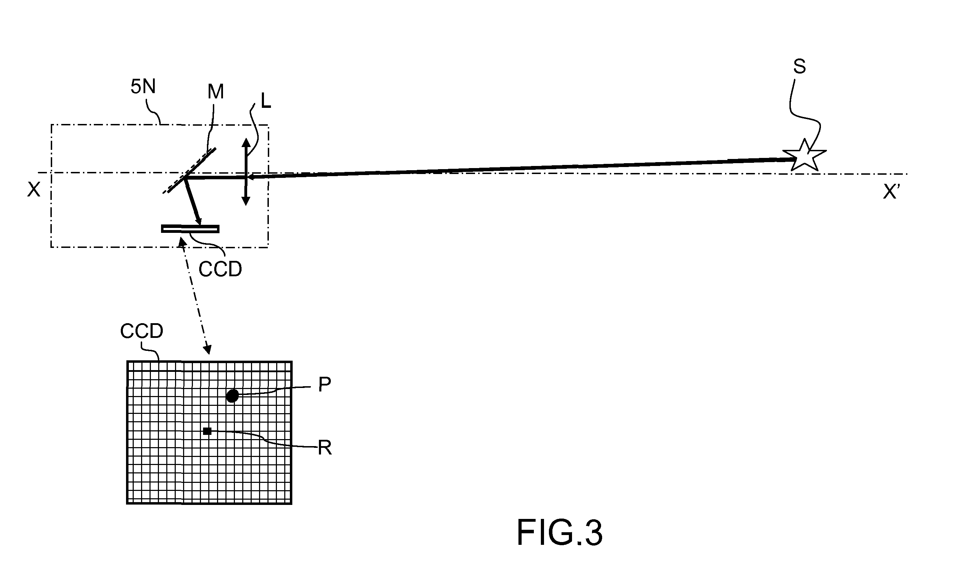

Ce capteur métrologique optique 5N est redondé par un capteur identique 5R. Le fonctionnement spécifique d'un capteur métrologique optique de précision sera décrit à l'aide de la figure 3 qui représente un exemple d'un tel capteur.

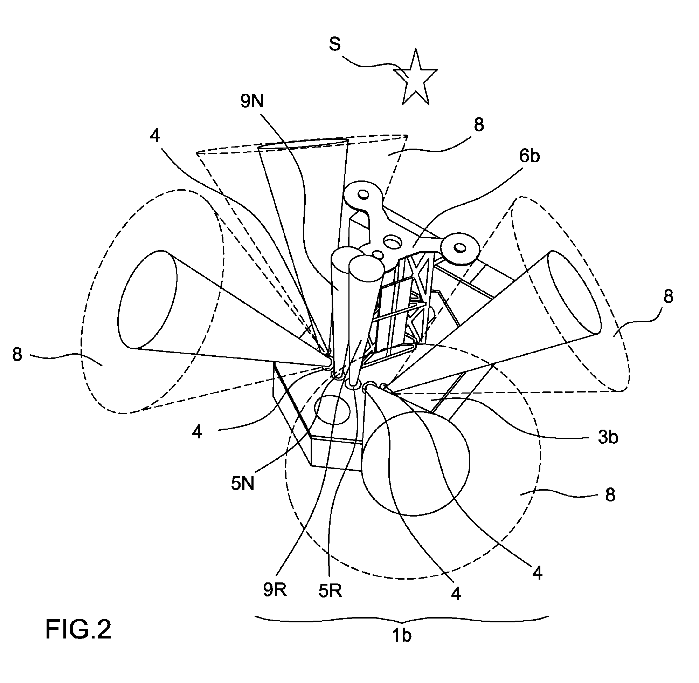

La figure 2 représente un exemple de système de visée absolue selon l'invention, monté sur un satellite 1b comportant un module de service 3b et une charge utile 6b. Le principe est donc de coupler un senseur d'étoiles classique avec ses quatre « têtes » 4, à un capteur métrologique optique de précision 5N redondé par le capteur 5R. Dans cet exemple, les champs de vue des quatre senseurs stellaires 4 sont représentés par des cônes 8 dont l'angle au sommet mesure environ 20°. Ces larges champs de vue 8 permettent de détecter de nombreuses étoiles brillantes connues, dont les coordonnées absolues figurent dans le catalogue d'étoiles auquel le senseur d'étoiles peut se référer.
Le capteur métrologique optique de précision 5N est mis à contribution lorsque le senseur d'étoiles a amené une étoile brillante connue S dans son cône de détection, correspondant au champ de vue 9N (9R pour le capteur 5R). Le capteur métrologique optique 5N peut alors localiser l'étoile brillante connue S dans son plan focal avec une précision maximale. Ainsi, dans un premier temps, une étoile brillante S est identifiée grâce aux senseurs d'étoiles 4 ; elle est connue et ses coordonnées figurent dans le catalogue d'étoiles. Par l'intermédiaire des senseurs d'étoiles 4, elle est localisée de manière absolue avec une précision moyenne due aux imperfections du senseur d'étoiles, typiquement au mieux quelques secondes d'arc.
Dans un deuxième temps, ladite étoile brillante S est localisée avec précision et de manière relative dans le référentiel de l'instrument 6b à l'aide du capteur métrologique optique 5N. En conséquence, le couplage du senseur d'étoiles 4 et du capteur métrologique optique 5N permet de ramener au satellite une précision de pointage absolue maximale, typiquement 0,1 seconde d'arc. L'erreur se limite à la somme de l'erreur sur la localisation relative de l'étoile brillante S visée par le capteur métrologique optique 5N dans le référentiel du satellite et de l'erreur sur les coordonnées absolues de l'étoile brillante S visée figurant dans le catalogue d'étoiles.
Les catalogues d'étoiles, et plus particulièrement les catalogues d'étoiles brillantes, ayant des précisions très élevées, la précision absolue du système est environ égale à la précision relative du capteur métrologique optique 5N, classiquement au moins dix fois meilleure que la précision absolue des senseurs d'étoiles standards, tels que les senseurs stellaires 4.

Dans un exemple de mise en oeuvre préférée du système de visée absolue selon l'invention, on pourra ainsi utiliser en guise de capteur métrologique optique un dispositif du type de celui décrit dans le brevet français n° FR2902894. Cette demande de brevet décrit un système de métrologie pour le vol en formation de satellites permettant la localisation relative de satellites dans l'espace.
De façon générale, dans le cadre du vol de satellites en formation, une mesure des positions relatives des satellites est requise, tout comme une mesure du pointage absolu des satellites vers des directions inertielles, telles que les étoiles. Pour les mesures de positions relatives inter-satellites, un capteur métrologique optique est utilisé. Pour les mesures de pointage absolu, un senseur d'étoile est utilisé. La précision de la mesure du capteur métrologique de positions relatives est généralement bien meilleure que la mesure absolue du senseur d'étoile. En revanche le capteur métrologique n'a aucune connaissance de l'environnement stellaire absolu. L'objet de l'invention est de combiner ces deux mesures et les informations des deux types de senseurs de telle sorte que l'on ait une précision de mesure absolue de l'ordre de la précision de mesure relative inter-satellite, et ceci sans ajouter aucun senseur supplémentaire à bord.

La figure 3 représente de façon très simplifiée le fonctionnement d'un tel capteur métrologique optique 5N. Dans la demande de brevet précitée, une source optique embarquée sur un satellite primaire émet un faisceau lumineux en direction d'un satellite secondaire qui réfléchit le faisceau lumineux en direction du satellite primaire. Le satellite primaire comprend un ensemble de détecteurs sur lequel est focalisé le faisceau lumineux réfléchi. C'est la mesure de la position du point lumineux obtenu sur l'ensemble de détecteurs qui permet de connaître la position relative du satellite secondaire par rapport au satellite primaire. Pour une utilisation dans le cadre de la présente invention, l'étoile brillante S se substitue à la source optique réfléchie par un miroir. La lumière issue de ladite étoile brillante S est focalisée à l'aide de lentilles L et de miroirs M en un point P sur l'ensemble de détecteurs CCD du capteur métrologique optique 5N. On mesure ainsi avec précision la distance du point P au centre R de la matrice de détecteurs CCD, et on en déduit la direction dans laquelle se trouve l'étoile brillante S par rapport à l'axe de visée X-X' du capteur métrologique optique 5N dans le propre référentiel dudit capteur 5N, donc dans celui du satellite, ou de l'ensemble de satellites, sur lequel il est embarqué. Avec un tel capteur métrologique optique 5N, la précision de pointage absolue du système selon l'invention peut atteindre environ 0,1 seconde d'arc.
Par ailleurs, un tel capteur métrologique optique 5N peut être intégralement étalonné au sol. En effet, on peut utiliser une source optique qui va se substituer à l'étoile S en vue d'effectuer au sol le calibrage du capteur métrologique optique 5N. Cet étalonnage au sol d'un tel capteur permet d'atteindre une précision sur la position de la source optique de l'ordre de la dizaine de microns à 20 mètres, ce qui correspond bien à une précision sur l'axe de visée de l'ordre du dixième de seconde d'arc.

En résumé, l'invention a pour principal avantage de permettre la mise en oeuvre d'un système de visée absolue présentant une précision maximale, compatible des précisions requises pour les missions d'observation spatiales actuelles et futures. De plus, pour parvenir à ce résultat, l'invention ne requiert qu'un senseur d'étoiles, généralement systématiquement intégré aux satellites d'observation, ainsi qu'un système de métrologie optique, indispensable à toute mission de vol en formation. La solution proposée dans la présente demande de brevet est donc aisée à intégrer, et potentiellement gratuite en masse et en coût matériel.

## Revendications

1. Système de visée absolue comportant un senseur d'étoiles (4) disposant d'un catalogue d'étoiles répertoriant un ensemble d'étoiles brillantes connues, c'est-à-dire dont on sait la position absolue, avec une précision catalogue, **caractérisé en ce qu'**il comporte en outre un capteur métrologique optique (5N,5R) permettant de déterminer avec précision des positions relatives, présentant une précision de mesure et auquel est associé un référentiel, ledit senseur d'étoiles (4) et ledit capteur métrologique optique (5N,5R) coopérant de telle sorte que le senseur d'étoiles (4) permet de pointer approximativement le capteur métrologique optique (5N,5R) dans une direction visée correspondant à une étoile brillante connue (S) du catalogue d'étoiles, le capteur métrologique optique (5N,5R) déterminant alors de façon précise la direction de ladite étoile brillante connue (S) dans son propre référentiel, permettant ainsi de connaître la direction visée avec une précision absolue optimisée, correspondant environ à la précision de mesure du capteur métrologique optique (5N,5R), à la précision catalogue près.

2. Système de visée absolue selon la revendication 1, **caractérisé en ce que** l'étoile brillante connue (S) présente une magnitude pouvant être à 3, 4, 5, ou 6.

3. Système de visée absolue selon l'une quelconque des revendications 1 à 2, **caractérisé en ce que** le capteur métrologique optique (5N,5R) comprend un ensemble de détecteurs (CCD) de type CCD, CMOS ou APS.

4. Système de visée absolue selon l'une quelconque des revendications 1 à 3, **caractérisé en ce que** le capteur métrologique optique (5N,5R) présente une précision lui permettant de déterminer une position relative d'un objet visé à 20 mètres à environ 10 microns près, permettant par conséquent d'atteindre une précision angulaire de visée inférieure ou égale à environ 0,1 seconde d'arc.

5. Système de visée absolue selon l'une quelconque des revendications 1 à 4, **caractérisé en ce que** le calibrage du capteur métrologique optique (5N,5R) peut être intégralement effectué au sol, à l'aide d'une source optique fibrée incohérente d'une puissance de l'ordre du milliwatt.

6. Satellite comprenant un instrument d'observation, **caractérisé en ce qu'**il intègre le système de visée absolue selon l'une quelconque des revendications 1 à 5, lui permettant de pointer précisément l'instrument d'observation vers un astre.

7. Procédé de pointage absolu exploitant le système de visée absolue selon l'une quelconque des revendications 1 à 5, ledit senseur d'étoiles (4) présentant un champ de vue large (8) et le capteur métrologique optique (5N,5R) présentant un champ de détection (9N,9R) et un axe de visée (X-X'), **caractérisé en ce que :**
• dans un premier temps, le senseur d'étoiles (4) amène l'étoile brillante connue (S), choisie comme direction visée (7), dans le champ de détection (9N,9R) du capteur métrologique optique (5N,5R) par l'intermédiaire de quelconques moyens de commandes et de mise en oeuvre de déplacements dudit système de visée absolue, ou alors, le champs de vue large (8) du senseur d'étoiles (4) et le champ de détection (9N,9R) du capteur métrologique optique (5N,5R) se recouvrent, par accommodation adéquate desdits senseur d'étoiles (4) et capteur métrologique optique (5N,5R),
• dans un deuxième temps, le capteur métrologique optique (5N,5R) mesure la direction visée (7) dans son propre référentiel,
la connaissance précise de la direction visée (7) correspondant à l'étoile brillante connue (S) dans le référentiel du capteur métrologique optique (5N,5R) et de la position absolue de ladite étoile brillante connue (S) grâce au catalogue d'étoiles permettant de déduire en fin de compte la direction visée (7) absolue avec précision.

8. Procédé selon la revendication 7, **caractérisé en ce que** l'on dispose d'un catalogue d'étoiles au sol, d'une précision supérieure à la précision catalogue du catalogues d'étoiles intégré audit système de visée absolue, et **en ce que** l'on se réfère audit catalogue d'étoiles au sol afin d'augmenter la précision absolue sur la connaissance des coordonnées de ladite étoile brillante connue (S), de manière à augmenter la précision de la direction visée (7) absolue.
